# EUROPEAN PATENT APPLICATION

(11) **EP 1 260 598 A1**
(43) Date of publication of application: **27.11.2002**
(21) Application number: 01870292.8
(22) Date of filing: 21.12.2001
(51) Int. Cl.: C21D 8/12, C22C 38/02, C22C 38/06, C23C 2/12, C23C 2/40, C23C 2/28

(54) **Steel sheet and process and equipment for producing the same**

(30) Priority: 14.05.2001 GB 0111703; 18.06.2001 US 299056 P
(71) Applicant: UNIVERSITEIT GENT, 9000 Gent (BE)
(72) Inventor: Houbaert, Ivan, 9270 Laarne (BE); Ros Yanes, Tania, 9070 Gent-Ledeberg (BE)
(74) Representative: Bird, William Edward

(57) **Abstract**

Steel with a silicon content between 3.5% and 8% by weight and an aluminum content of up to 8% by weight is produced by a process comprising (i) hot-dipping steel with a Si-content below 3.5% by weight into a silicon-aluminum hyper-eutectic mixture followed by (ii) a thermal treatment step performed within a temperature range between 700° and 1300°C for a period of time of not more than 100 hours. The process is suitable for large scale continuous industrial production of magnetically superior steel sheet at low cost.

High silicon and aluminum content steel is useful for making electrical equipment with optimized electrical and magnetic properties.

## Description

The present invention relates to steel with improved magnetic properties and machines and processes for the production thereof. More specifically, the invention relates to steel with excellent magnetic properties having, for example, high silicon and aluminum contents which is useful namely for the manufacture of electrical appliances and devices as well as machines and methods for the production thereof.

### BACKGROUND OF THE INVENTION

Iron silicon alloys (silicon steel) has been extensively used as soft magnetic materials in electrical appliances and devices, in particular for transformers and motors using electronic power and being operated at frequencies up to about 400 Hz and higher in order to obtain higher response, efficiency and miniaturization. For this purpose, a core material with low iron loss in the high-frequency range and low magnetostriction properties is required. The main factors influencing magnetic properties are strip thickness, silicon concentration, grain size, impurities level and crystallographic texture.

It is well known that higher Si-contents in steel provide increased electrical resistance and improved magnetic properties. Also increased Al-contents are known to improve the magnetic properties of steel. In some applications, the Si-content does not need to be increased in the complete section of the steel sheet, but rather only in the surface thereof. In other applications, a homogeneous Si-content over the cross section may be desired. In this context, silicon steels with 6.5% Si have a high resistivity and permeability, and therefore low Eddy current losses and hysteresis losses, especially at higher frequencies, and almost zero magnetostriction, which reduces the noise problem. However, high concentrations of silicon in steel are very detrimental to the mechanical properties of the material, since silicon causes severe embrittlement and it becomes very difficult to roll the material into a thin sheet. In particular, it is difficult to process a steel sheet with a Si-content higher than about 3.5% mainly because of its brittleness and the appearance of cracks during rolling and in addition because of oxidation. Therefore, silicon content in commercial material is usually limited by the need for a compromise between the benefits of improved resistivity and lower hysteresis and the detrimental effect of decreased ductility.

Because of the above-mentioned technological problems, several methods have been developed in order to obtain high Si-content steel without rolling, such as powder coating, surface diffusion and chemical vapor deposition. In some cases, hot dipping by immersion into a Al-Si bath with at most 11% Si by weight has been used to obtain a protective Al-rich surface layer in order to protect steel against corrosion and oxidation without distortion.

For instance, U.S.Patent No. 4,079,157 discloses a procedure in order to achieve Al-rich plating layers with a stable thickness, so that distortion of a plated element does not occur even after prolonged service. This is achieved because the specific heat treatment causes preferential diffusion of silicon into the steel. The method of patent consists of the dipping of a sheet of austenitic stainless steel into a bath consisting of aluminum and 5 to 11% by weight silicon at a temperature of 700 to 750°C for a period of time of 30 to 120 seconds, then heat treating the said sheet at a temperature of 750 to 850°C for at least 60 minutes, and finally heat treating the said sheet at a temperature of 900 to 1000°C for at least 60 minutes. This application of hot dipping and diffusion annealing is used in order to obtain a stable coating on an austenitic steel substrate, which should not be modified by the process. There is no aim in this document to increase the Si-content over the thickness of the sheet nor to obtain a steel material with improved magnetic properties.

Also, high silicon steel strips may be produced in a continuous treatment line through chemical vapor deposition at temperatures between 1000° and 1200°C in a non-oxidising gas atmosphere containing silicon tetrachloride, such as disclosed for instance by U.S.Patent No. 5,089,061.

Increasing the Si-content of steel may be limited to the application of a Si-rich coating onto the surface of the steel sheet. For instance, it has been shown that a Fe₃(Si,Al) based surface layer or a Si-rich coating and can be obtained through the so-called hot-dipping technology. The hot dipping process allows to carry out additional surface alloying of the silicon steel sheets by silicon and/or other elements. More specifically, it is known from Y. Houbaert et al. in *7*^{*th*} *EMMA Conference proceedings,* Zaragoza (September 1998), page 245, to coat ULC and ULC-Ti type steel substrates with hypereutectic Al-Si alloys, after a recrystallization treatment in a N₂-5% H₂ atmosphere, in order to obtain a layer with strongly increased silicon and/or aluminum contents, which would still need to be diffused later into the bulk material by diffusion annealing. Using process conditions including a melt alloy composition of 18-23% Si, a melt temperature of 650°C up to 825°C and a dipping time up to 4 seconds, the coating obtained consists of a layer of hard brittle Fe-Al or Fe-Al-Si compounds on which a layer of liquid coating adheres and subsequently solidifies. This solidification surface layer consists of primary silicon crystals within a matrix of eutectic Al-Si. It is also known from Y. Houbaert et al. in *EMMA Conf. Abstract Proc.,* Kiev (June 2000), page 167, that when hot-dipping of a 3% Si steel into a hypereutectic Al-Si alloy is followed by an annealing procedure at 800°C for 70 hours (and optionally at 1200°C for 5 hours), the said thermal treatment does not result in diffusing any silicon or aluminum into the steel. T. Ros-Yanez et al. in *Proc. TRATERMAT*, Barcelona (June 2000) disclosed hot-dipping of a 3.2% Si steel sheet (having a thickness of 350 µm) into a hypereutectic Al-Si alloy during 2 to 600 seconds, followed by an annealing procedure at 700-800°C for 60 seconds, then by cooling at a rate of 20°C/minute until 300°C and finally by rapid cooling. Using such conditions, the formation of a layer of Fe₃Si was observed, the thickness of which increases with dipping time until reaching about 11 µm. This procedure however was unable to achieve homogeneous silicon and/or aluminum gradients in the whole substrate thickness.

Thus, a need exists in the art for obtaining steel with high silicon and aluminum contents, or for increasing the Si-content and/or the Al-content of a low Si-content steel by a method avoiding the drawbacks of the chemical vapor deposition method, mainly the fact that such method is slow and expensive. More specifically, a need exists in the art for obtaining inexpensive steel sheets with satisfactory magnetostriction properties, thus making them useful as components for transformers and motors using electronic power being for instance operated at frequencies up to about 400 Hz and higher. A need also exists in the art for obtaining steel sheets with a Si-content up to about 8% by weight and an Al-content up to about 8% by weight, with either substantially homogeneous silicon and aluminum concentrations within the whole sheet thickness or with silicon and/or aluminum concentration gradient(s) over the said thickness. It is the purpose of the present invention to address these various needs.

### SUMMARY OF THE INVENTION

The present invention is based on the unexpected finding that the Si-content and the Al-content of steel can be significantly raised by an inexpensive method involving a hot-dipping step of a low Si-content steel into a Si-rich metal bath, e.g. a Si-containing hyper-eutectic mixture, and a subsequent heat-treatment (diffusion annealing) step, provided that the particular operating conditions of each step be suitably selected. Concerning the hot-dipping step, the parameters of bath composition, bath temperature, substrate temperature, dipping time and atmosphere should most preferably be selected in such a way that primary silicon crystals are deposited onto the surface, accompanied by Al-rich inter-metallic products. This is obtained by working closely to the liquidus temperature of the melted Al-Si alloy. Concerning the diffusion annealing step, process parameters should be selected in order to avoid delamination of the coating layer(s) provided onto the surface of the low Si-content steel during the hot-dipping step. Such effective operating conditions include a selection of both a temperature range and a period of time for the heat-treatment step. Such effective operating conditions may also include a moderate heating rate between the hot-dipping step and the subsequent heat-treatment step, also with an aim of avoiding delamination of the coating layer(s) provided onto the surface of the low Si-content steel during the hot-dipping step. Depending on the economic requirements, the process of the invention may be carried out batchwise, continuously or semi-continuously.

More precisely, the present invention first relates to a process for producing steel with a silicon content between about 3.5% and 8% by weight and with an aluminum content up to about 8% by weight, comprising (i) hot-dipping a steel substrate with a Si-content below about 3.5% by weight into a silicon-aluminum hyper-eutectic mixture followed by (ii) a thermal treatment (i.e. diffusion annealing) step, characterized in that step (ii) is performed within a temperature range between about 700° and 1300°C (preferably 850 to 1300°C) for a period of time of not more than about 100 hours (preferably not more than about 5 hours, preferably at most about 5 minutes) and preferably at least about 30 seconds (more preferably at least about 100 seconds). The present invention also relates, in a preferred embodiment, to a thin steel sheet with a silicon content between about 3.5% and 8% by weight and an aluminum content up to about 8% by weight, having substantially homogeneous silicon and/or aluminum concentrations within the whole sheet thickness or having silicon and/or aluminum concentration gradient(s) over the said thickness (preferably with the highest concentration near the sheet surface and the lowest concentration at or near half thickness), being preferably obtained by the aforesaid process. This invention also relates to an iron-based alloy including above 3.5% by weight and up to about 8% by weight (preferably from about 4 to 7% by weight) silicon and from about 0.1% to about 7.5% by weight (preferably from about 0.5% to 7% by weight) aluminum, the sum of silicon and aluminum being preferably from about 4% to 15.5% by weight, preferably about 6% to 12%, that can be processed in the form a substrate such as a thin sheet. Such iron-based alloy can be oriented or not, depending upon the intended use. More specifically, the invention relates to non-oriented iron-based alloys including silicon and aluminum and having unexpectedly good magnetic properties including a power loss at 50 Hz of not more than about 4 W/kg, preferably not more than 3 W/kg, and more preferably not more than 1.5 W/kg at a field strength of 1.5 tesla. The latter magnetic properties apply in particular to the non-oriented alloys having the silicon and aluminum concentrations indicated herein-above.

Although the present invention is described herein in greater detail with respect to a silicon-aluminum hyper-eutectic mixture and to a combination of a hot-dipping step and a subsequent heat treatment (diffusion annealing) step, this invention is not limited to such an embodiment but also includes variants which are able to provide similar electrical and magnetic properties, e.g. other Si-containing eutectic or hyper-eutectic mixtures such as silicon-magnesium alloys or ternary silicon-magnesium-aluminum alloys, provided that the specific process conditions be adapted as a function of the melting point of the metal(s) involved in the said alloy. The present invention may also be applied to the dip coating and diffusion annealing of other materials such as dip coating in a manganese-aluminum alloy.

The present invention also provides an electrical appliance or device, such as a transformer or a motor operated at 16²/³ Hz, 50 Hz, or higher frequencies such as 400 Hz, comprising a component made from a steel sheet such as above defined or obtained by the process such as disclosed herein.

The present invention finally provides an apparatus for producing steel with a silicon content between about 3.5% and 8% by weight and an aluminum content up to about 8% by weight, comprising:
- (i) a device for liquid coating a steel substrate with a silicon content below about 3.5% by weight into a silicon-aluminum hyper-eutectic mixture,
- (ii) a control device for controlling the process parameters of the liquid coating device,
- (iii) a thermal treatment device located downstream from the liquid coating device for diffusing silicon and aluminum of the hyper-eutectic mixture into the steel substrate, and
- (iv) a control device for controlling the process parameters of the thermal treatment device, the said process parameters including at least a temperature range between about 700° (preferably 850°) and 1300°C and a period of time of not more than about 100 hours, preferably not more than about 5 hours.

The liquid coating device (i) is preferably a hot-dip coater.

Such an apparatus is able to perform the manufacturing process of the invention by accurately controlling the conditions which, as explained herein-above, are essential for achieving the goals and advantages of the said process. The thermal treatment device may be an in-line device for continuous manufacture of the steel or a separate single plate or batch processing device.

The present invention will now be described with reference to the following drawings.

### BRIEF DESCRIPTION OF THE DRAWINGS

Figure 1 diagrammatically shows an embodiment of a continuous process of making high silicon content steel according to the present invention.

Figure 2 shows the concentrations of silicon and aluminum throughout the thickness of a steel sheet produced by a process according to one embodiment of the present invention.

Figure 3 shows the power loss at 50 Hz of various materials made according to the invention as a function of the peak induction level.

Figure 4 shows the power loss at 400 Hz of various materials made according to the invention as a function of the peak induction level.

Figure 5 shows the power loss, at various peak induction levels, of a material made according to one embodiment of the present invention, as a function of frequency.

Figure 6 shows the peak amplitude permeability at 50 Hz of a material made according to one embodiment of the present invention, as a function of the peak induction level.

Figure 7 shows the concentrations of silicon and aluminum throughout the thickness of a steel sheet produced by a process according to another embodiment of the present invention.

Figure 8 shows the power loss at 50 Hz (figure 8A) and 400 Hz (figure 8B) respectively, as a function of the peak induction level, of a material made according to another embodiment of the invention, compared to the starting untreated material.

### DETAILED DESCRIPTION OF THE INVENTION

The present invention will be described with reference to certain embodiments and drawings but the present invention is not limited thereto. The embodiments of the present invention will be described with reference to silicon containing steels especially steels rich in silicon but the principles of the present invention may be applied to other steels, for instance to those containing aluminum or manganese. The present invention will mainly be described with reference to dip-coating in a bath containing silicon and aluminum but the present invention may be used with other liquid coating techniques and with other alloys, e.g. other silicon binary alloys such as silicon-magnesium allows, other silicon tertiary alloys such as silicon-aluminum-magnesium, and other aluminum alloys, such as manganese-aluminum alloys. The present invention will also be described with reference to non-oriented steels but the present invention may also be applied to produce oriented steels. Of necessity the coating bath may contain other components such as iron dissolved from the steel to be processed but these elements should preferably be kept to a low level.

As previously explained, one aspect of the process of the present invention lies in controlling a liquid coater, e.g. hot-dipping parameters in a hot-dipping bath of melted hyper-eutectic Al-Si alloy. Instead of a hot dipping bath a flood coater may be used. The alloy composition in the instant invention is preferably a hyper-eutectic Al-Si mixture, more preferably with a Si-content not higher than about 35% by weight in order to limit the hot-dipping bath temperature. The range for the Si-content of the said molten bath is between 12.6% Si (eutectic composition) and 35% Si, a typical value being about 25% Si by weight. The temperature of the hot-dipping bath should preferably be maintained at a maximum of 50°C higher than the corresponding liquifying temperature, whilst the temperature of the preheated substrate should preferably not be less than 50°C lower than the liquifying temperature of the bath. The dipping time should be relatively short and should not exceed about 600 seconds, for instance should preferably be between about 2 and 100 seconds, in order to avoid dissolution of the steel substrate in the liquid bath. As will be understood by those skilled in the art, the duration of the hot-dipping step will be higher when the bath temperature decreases. The use of gas wipers in order to control the thickness of the surface layer may be recommended. Immediately following the hot-dipping step or subsequently, a first diffusion annealing step (also called alloying annealing) may be performed in order to diffuse the elements present in the deposited coating, Al and Si, into the steel substrate, i.e. in order to control their concentration throughout the substrate. In such a way, either a substantially constant concentration of these elements may be obtained over the whole thickness of the substrate, or a preset concentration gradient of these elements may be obtained, if desired for a certain purpose. This can be achieved through the adequate choice of alloying annealing parameters, especially temperature (usually slightly below the hot-dipping temperature) and time (usually a few minutes), as a function of the thickness of the substrate. Alloying annealing is preferably carried out in an inert or reducing atmosphere.

Another aspect of the process of the invention lies in the temperature of the heat treatment (diffusion annealing) step, which should be selected within a range between about 700° (preferably 850°) and 1300°C and in controlling the duration of the said heat treatment. It has surprisingly been found that diffusing silicon and aluminum into the low Si-content steel substrate may be achieved by significantly lowering the duration of the heat treatment step over the duration of 70 hours and more previously known from *EMMA Conf. Abstract Proc*., Kiev (June 2000). The duration of the heat treatment is usually dependent upon the selected temperature for the said heat treatment step. For instance, a period of time between about 100 seconds (preferably 5 minutes) and 60 minutes will often be suitable when the heat treatment temperature is set at a value of about 1200°C, whereas a period of time between about 1 and 5 hours will be suitable when the heat treatment temperature is set at a value of about 900°C.

Another important feature of this process lies in controlling the heating rate from the hot-dipping step temperature (or the temperature of the material immediately prior to the second thermal treatment step) up to the thermal treatment step temperature. This heating rate, usually selected between about 5 and 300°C per minute, was unexpectedly found to significantly influence the average composition and the homogeneity of the resulting iron-based alloy and steel sheet produced therefrom, as demonstrated by the following examples. More specifically, a heating rate below about 25°C per minute has been found to promote higher average concentrations of silicon and aluminum and a substantially homogeneous distribution of the said concentrations throughout the substrate (e.g. sheet) thickness, i.e. local concentrations deviate from the average concentration by no more than about 15%. At the opposite, heating rates higher than about 100°C per minute tend to promote significantly lower concentrations of silicon and aluminum and a significantly less homogeneous distribution of the said concentrations throughout the substrate, with some local concentrations deviating from the average by more than 20%. A reason for the latter feature may be that at higher heating rates, a partial elimination of the coating may be observed due to the thermal stresses developed from the different thermal expansion coefficients of the coating and the substrate, with the consequence that a less substantial enrichment of silicon and/or aluminum may be obtained under such conditions.

Within the framework of the process of the invention, the hot-dipping step (i) is preferably performed within a temperature range between about 650°C and 900°C. The hot-dipping step is also preferably performed under an inert atmosphere or under vacuum. Similarly, the thermal treatment step (ii) may be performed in an inert or reducing atmosphere or under vacuum.

The composition of the starting low Si-content steel should be in accordance with the aim of the process of the invention, which is to produce a steel sheet with excellent magnetic properties. In the starting material, the Al- and Si-contents will therefore be sufficiently low to allow easy processing of the base material during cold rolling prior to hot-dipping, i.e. the silicon content should be lower than about 3.5% by weight, the aluminum content lower than 4% by weight and the sum of the Si- and Al-contents should be less than 5% by weight. Nevertheless, as is well known to the skilled person, it is mandatory to have a sufficient concentration of Al and/or Si in the starting steel substrate in order to ensure the stability of the ferritic phase through the complete processing temperature range. Preferably, the starting material is in a crystallographic state which may be described as body centered cubic (BCC), and that this crystal structure is maintained over the processing temperature range. Other alloying elements may be present, such as manganese, provided that they do not affect magnetic properties. The level of impurities in the starting material should be kept sufficiently low in order to avoid a deterioration of the magnetic properties. Therefore, the following limits should preferentially not be exceeded: S < 0.02%, N < 0.005%, P < 0.1%, O < 0.005%, and the carbon content should be lower than 0.005% in order to avoid magnetic aging in the final product. Alloying elements such as manganese, titanium and niobium may also be tolerated.

As used herein, the term "hyper-eutectic mixture", referring to the silicon-aluminum phase diagram, means a mixture wherein the concentration of silicon is higher than that of a or the eutectic mixture, i.e. higher than 12.6 weight % in the case of Si-Al. A preferred embodiment of the present invention involves using a silicon-aluminum hyper-eutectic mixture comprising from about 15 to 35%, more preferably from about 20 to 30%, by weight silicon in the hot-dipping step (i).

Optionally, the process of the invention may further include, prior to the hot-dipping step (i), a standard thermal treatment of the steel sheet, for instance to obtain a surface with a low carbon content and without a forsterite layer.

Using the above-identified conditions, it has been found possible to process, after the hot-dipping step (i), a steel substrate which is coated with one or more Si-rich layers consisting of phases selected from Fe₃Si and aluminum-containing intermetallics such as FeAl₂, Al₃Fe₃Si₂ , Al₁₂Fe₆Si₅, Al₃FeSi₂ and the like. While varying the process conditions, namely the duration of the hot-dipping step (i) and the composition of the hyper-eutectic mixture, it is also possible to vary the respective importance, in terms of thickness, of the said Si-rich and Al-rich layers.

The process of the present invention is especially useful when applied to a steel substrate in the form of a sheet. The starting low Si-content steel sheet may, for instance, have a thickness between about 0.2 and 2 mm, more preferably between about 0.3 and 1 mm. The thickness of the sheet before processing according to the instant invention is determined by the desired final thickness after treatment. If necessary, a cold rolling step can be provided immediately before starting hot- dipping. The process may be performed continuously, using standard equipment well known to those skilled in the art except for the specific novel combination of machine stages and control devices according to the present invention. It may also be advantageous, under certain circumstances, that the process of the invention further includes a cold rolling step and/or a pickling/cleaning step and/or a final annealing step after the thermal treatment step. Such a combination of cold rolling followed by an adequate thermal treatment may by used in order to modify the microstructure of steel in terms of grain size and crystallographic texture. This may be useful to ensure the optimal magnetic properties and mechanical properties of the final material, namely in view of optimizing the mechanical cutting of the material. The pickling step may be used to improve the quality of the surface of the steel sheet.

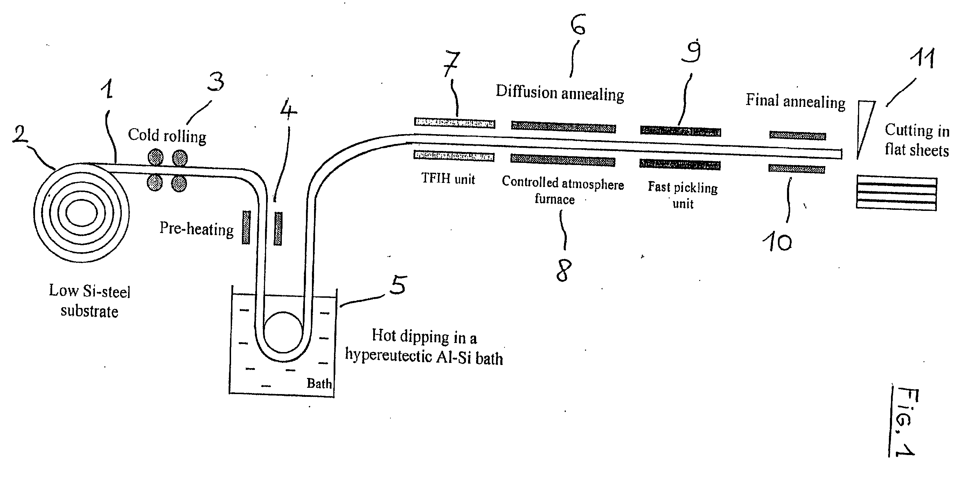

Figure 1 schematically shows an industrial production line and apparatus for continuously performing the process of the invention. On this figure, the meaning of each individual device/step of this embodiment is indicated. Low-Si steel sheet 1 may be supplied from a roll 2. The sheet 1 may be pre-treated in one or more pre-treatment stations 3, 4, e.g. rolled in a rolling mill 3 and/or pre-heated, e.g. subjected to a standard thermal treatment of grain oriented Si-steel sheet in order to obtain a surface with a low carbon content and without a forsterite layer (4), before entering a dipping bath 5 containing the required eutectic alloy in liquid state. The bath 5 may be maintained under an inert or reducing atmosphere or vacuum. A suitable gas or vacuum feed and control device therefor are then provided (not shown). A suitable control device (not shown) is provided for controlling the bath 5, e.g. its temperature as well as the liquid level in the bath by addition of the appropriate amounts of silicon and aluminum or other elements depending upon the alloy used. The percentage concentrations of aluminum and silicon in the bath may be monitored and the amount of silicon and aluminum to maintain the required ratio of these materials added in accordance with the measurements.

After leaving the bath 5 the coated steel sheet 1 is subject to an annealing-diffusion step in suitable equipment 6. Preferably, the steel sheet is not subjected to severe bending after the dipping step. Hence, in one embodiment the coated steel 1 enters a diffusion-annealing oven 6 in a flat state. The steel sheet 1 in the oven 6 may be held under a reducing or inert atmosphere or under vacuum. A suitable gas or vacuum feed and control device therefor are then provided (not shown). Also one or more temperatures in one or more regions of the equipment 6 may be controlled by a suitable control device. The equipment 6 comprises means 7 for heating the sheet 1 and means 8 for maintaining it at a predetermined temperature and in a predetermined atmosphere. One suitable means for heating steel strip during the diffusion annealing step is a transverse flux induction heater (TFIH) which is a method of rapid heating of steel sheet. Alternative heating methods may be used, e.g. infrared heaters.

After the diffusion equipment 6, equipment for other ancillary operations may be provided, for example a pickling bath 9 for cleaning and preparing the surface of sheet 1. The magnetic properties of the sheet steel may be modified or adjusted by methods known to the skilled person, e.g. a light rolling in a rolling mill. Similarly, orientation equipment may be provided. Sheet 1 may be subjected to a final annealing step in an annealer 10. Finally, the sheet 1 may be cut into strips in a cutting device 11 and stored.

Instead of continuous in-line diffusion-annealing, this step may be carried out sheet-by-sheet in one or more separate ovens or in a batch oven. Where there is a significant mismatch between the throughput of the dip coating step and the diffusion-annealing step, the latter may be carried out in a plurality of continuous ovens. For this purpose, the steel sheet 1 is cooled after the dip coating bath 5 and cut into lengths, e.g. 1 to 3 meters long. These lengths are placed one by one into one of a plurality of conveyor ovens for diffusion annealing. Alternatively, the cut lengths may be loaded into a batch oven and all the lengths diffusion annealed at the same time.

One of the main advantages of the present invention is that it is able to provide a predictable silicon and/or aluminum gradient, e.g. a substantially homogeneous silicon concentration and/or a substantially homogeneous aluminum concentration within the whole steel sheet thickness. Another advantage is that it is able to substantially increase, in some instances more than double, the silicon content of the steel sheet, e.g. to bring it up to the level of about 3.5 to 8%, preferably about 4.5 to 7% by weight. At the same time, the aluminum content of the steel sheet can be increased to values typically ranging from about 2.5 to 7.5%, preferably from about 4 to 6%, by weight. As a result, the electrical and magnetic properties of the alloy are improved. A further advantage of the invention is that electrical equipment with improved performance may be easily and inexpensively manufactured without encountering the well-known problems of the surface diffusion, chemical vapor deposition and rolling techniques.

The present invention will now be described in more details by reference to the following examples, which are provided for illustrative purposes only and should not be interpreted as limiting the scope of the invention.

### EXAMPLE 1

A silicon-aluminum coating is applied to a low Si-content steel sheet by means of a hot-dip simulator which permits to reproduce the various treatment steps of a cold rolled sheet, such as:
- simulation of the continuous annealing under controlled atmosphere
- annealing in reduced atmosphere
- immersion in melted baths with different compositions
- controlled cooling after hot dipping
- annealing treatments before and after immersion.
This equipment consists of a control unit for the furnace where the alloy is molten, a control unit for the infra-red furnace where the sample is annealed, a general process controller comprising a computer and a control panel, and finally a central unit consisting of:
(a) an upper chamber wherein the sample is brought in and wherein cooling of the sample can take place before it is removed; the infra-red furnace is located beneath this upper chamber, which enables the sample to receive a heat treatment before or after dipping; and
(b) a lower chamber, separated from the upper chamber by a gate valve, where the molten metal bath is located and where dipping of the sample is effected; a gas-wiping system, which may be used to control the layer thickness of the coating, is also located in this chamber.
The sample is introduced into the upper chamber under a N₂-5%H₂ protective atmosphere. Using a thermocouple welded to the sample, the temperature during the treatment is measured. The sample, which may be annealed in the infra-red furnace before dipping, enters the lower chamber through the gate valve and is dipped into the bath. After dipping, the sample is taken again to the infra-red furnace where it can undergo a diffusion annealing. Finally, it goes to the upper chamber where it is cooled down to 25°C before being removed. The sample material used in these experiments is a grain oriented electrical sheet with a 0.35 mm thickness and a chemical composition (expressed as percentages by weight) as follows:
- carbon : 0.003%
- silicon : 3.2%
- manganese : 0.14%
- phosphorus : 0.016%
- sulfur : 0.018%
- aluminum : 0.016%
- niobium : 0.005%
- titanium : 0.003%
- nitrogen : 0.0008%
This material was cut into samples with dimensions 200 x 110 x 0.35 mm. A standard thermal treatment of the grain oriented Si-steel sheet was applied before dipping in order to obtain a surface with a low carbon content and without a forsterite layer. Prior to dipping, the sheets were cleaned in acetone and ethanol in an ultrasound cleaner to avoid the presence of impurities and greases that could interfere with the process.

Samples were pre-heated at 850°C for 20 seconds, then dipping into the Si-Al hyper-eutectic mixture was performed during 20 seconds, followed by a short diffusion annealing at 800°C for 60 seconds. Dipping and heat treatment inside the hot-dip simulator were carried out in a N₂-5%H₂ protective atmosphere. Analysis of the samples after dipping and short diffusion annealing shows the presence of the five following layers onto the substrate: Fe₃Si, FeAl₂, Al₃Fe₃Si₂, Al₁₂Fe₆Si₅ and Al₃FeSi₂. No silicon enrichment was detected in the substrate at this stage.

Then in a second step, coated samples removed from the upper chamber of the hot-dip simulator were encapsulated under vacuum in quartz tubes (in order to avoid oxidation and/or evaporation of silicon and/or aluminum) and heat treatment (diffusion annealing) was performed. The said treatment consists in heating the samples from 25°C up to 750°C at a rate of 8°C per minute, optionally keeping the temperature constant at 750°C for about 15 minutes, and further heating from 750°C to 1200°C or 1250°C, at which point temperature is maintained constant for a period of time of 5 to 40 minutes.

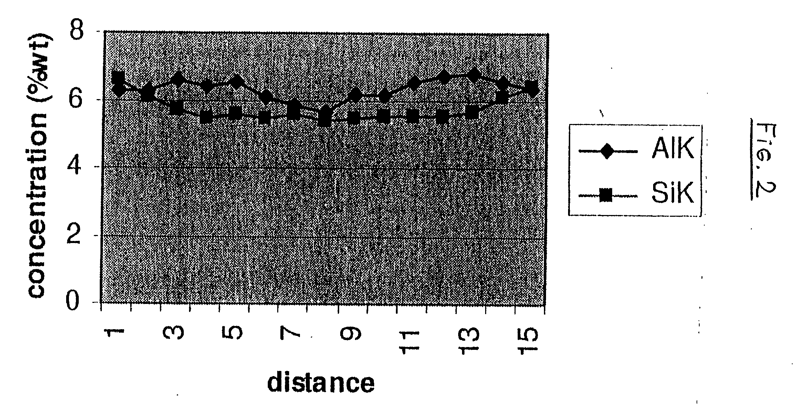

Whilst various silicon and aluminum concentration gradients may be achieved within the above ranges of process conditions, figure 2 is representative of the results obtained after such treatment. The said figure shows the silicon concentration (noted as SiK) and the aluminum concentration (noted as AIK), both expressed as weight %, throughout the thickness of the sample. It is important to note that these concentrations are substantially constant throughout the sheet, as follows: from 5.4% to 6.7% silicon and from 5.7% to 6.8% aluminum. This shows that the process of the invention was able to bring the average silicon concentration in the steel sheet from 3.2% to about 6% by weight.

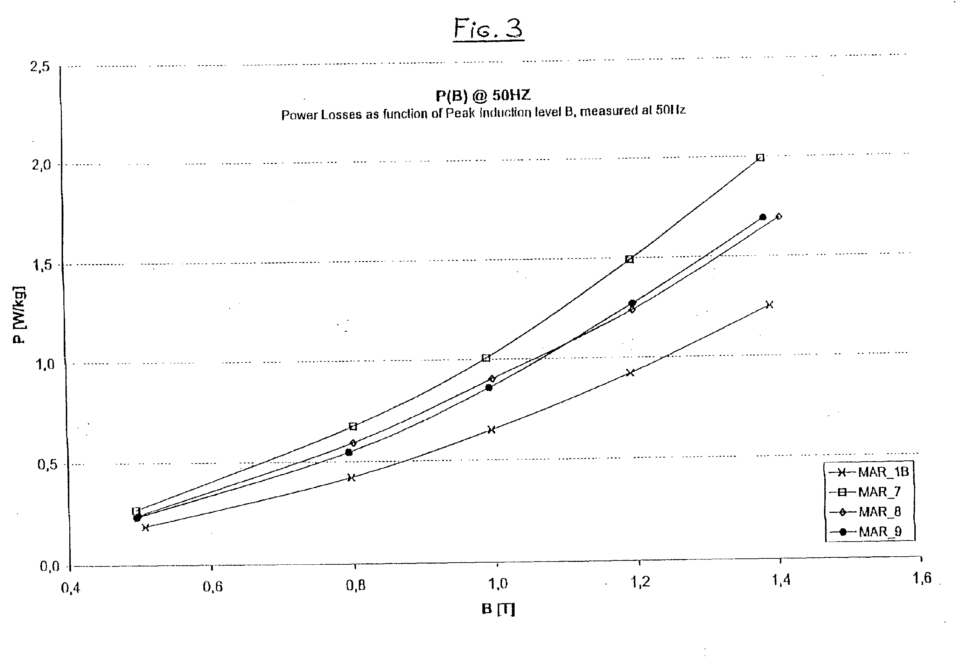

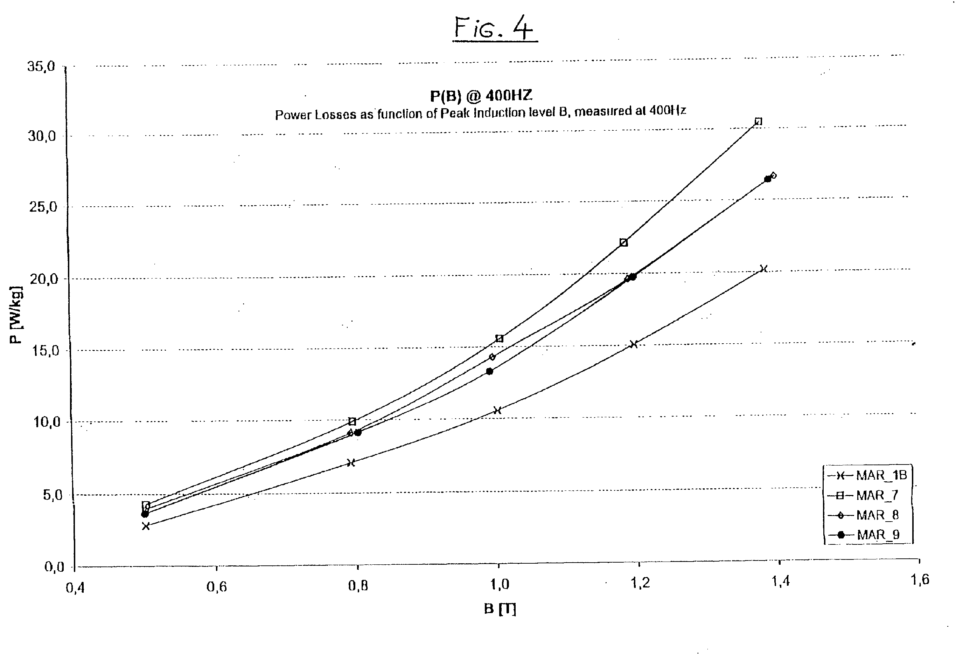

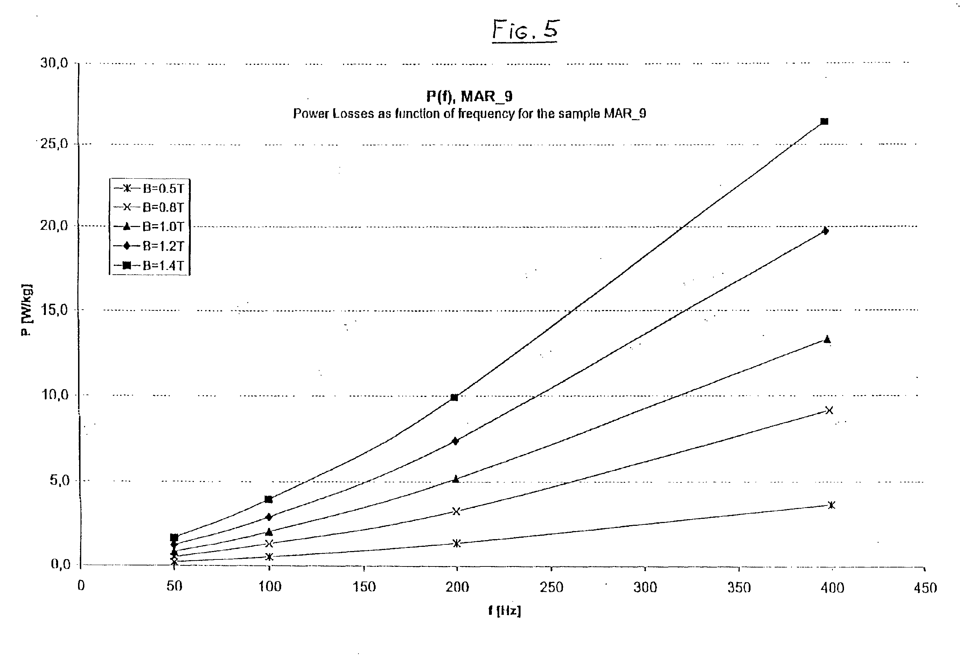

From the above procedure four different samples, respectively named MAR 1B, MAR 7, MAR 8 and MAR 9, were prepared with the average following characteristics:
- mass: 0.44 g
- breadth: 4.85 mm
- length: 3.5 cm
- density: 7400 kg/cm³
- effective magnetic waylength: 0.02
- number of inducing coils: 20
- number of measuring coils : 50
Power loss measurements were made according to standard IEC 404-3. BH-loops were measured for peak induction levels (ranging from 0.5 tesla to 1.4 tesla) and for frequencies (ranging from 50 Hz to 400 Hz). Results of these measurements are included in the following table and also shown on figures 3 to 5, which show unexpectedly good properties, including :
- a power loss from 1.25 to 2.0 W/kg at 50 Hz and a peak induction level of 1.4 tesla.
- a power loss from 20 to 30 W/kg at 400 Hz and a peak induction level of 1.4 tesla.
These results are unexpectedly better than the results of measurements made on samples obtained according to the teachings of Y. Houbaert et al. (Kiev, June 2000) and T.Ros-Yanez et al. (Barcelona, June 2000), both cited *supra,* which showed the following magnetic properties:
- a power loss from 5.5 to 6.5 W/kg at 50 Hz and a peak induction level of 1.4 tesla.
- a power loss from 56 to 85 W/kg at 400 Hz and a peak induction level of 1.4 tesla.

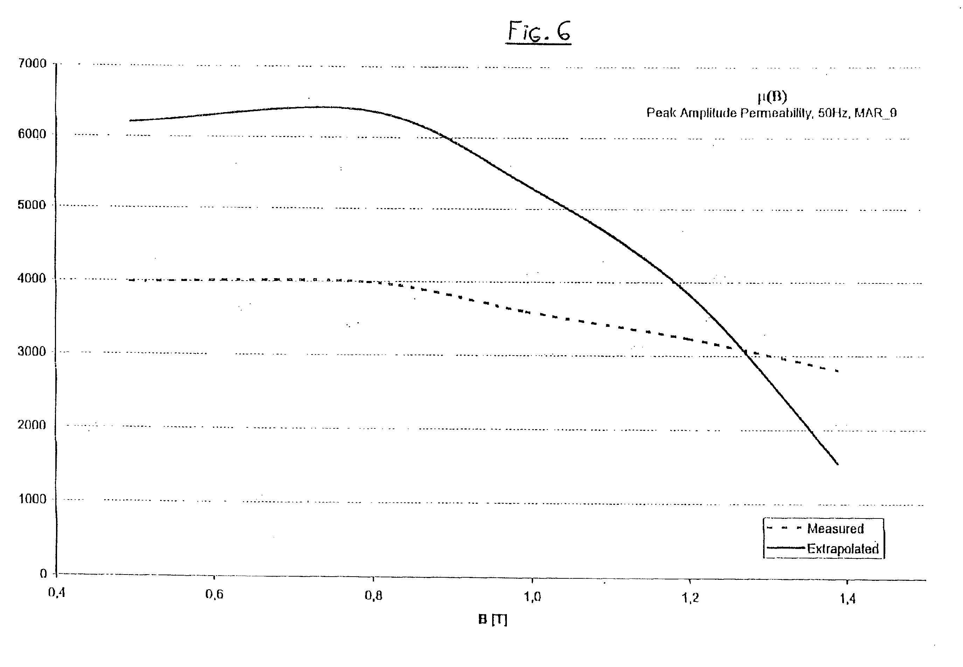

Figure 6 shows the estimated amplitude permeability of one sample (MAR 9), measured at 50 Hz. A distinct drop in permeability is not noticeable on this figure, therefore the saturation induction level is difficult to establish but should be higher than 1.4 tesla.

### EXAMPLE 2

The experiment of example 1 is reproduced, starting from the same 0.35 mm thick electrical sheet (magnetic properties at a peak induction level of 1.4 tesla: a power loss of 4.8 W/kg at 50 Hz and a power loss of 50 W/kg at 400 Hz), except that (i) pre-heating of the sample at 850°C prior to the hot-dipping step was performed for 60 seconds (instead of 20 seconds) and (ii) the second heat-treatment step was performed by introducing the samples encapsulated inside quartz tubes under vacuum directly into the furnace at the aimed temperature of 1250°C (temperature control means provide the information that the furnace temperature was reached within 5 minutes, thus affording a fast heating rate of about 245°C per minute) and then maintaining them at the said temperature for 15 minutes before cooling.

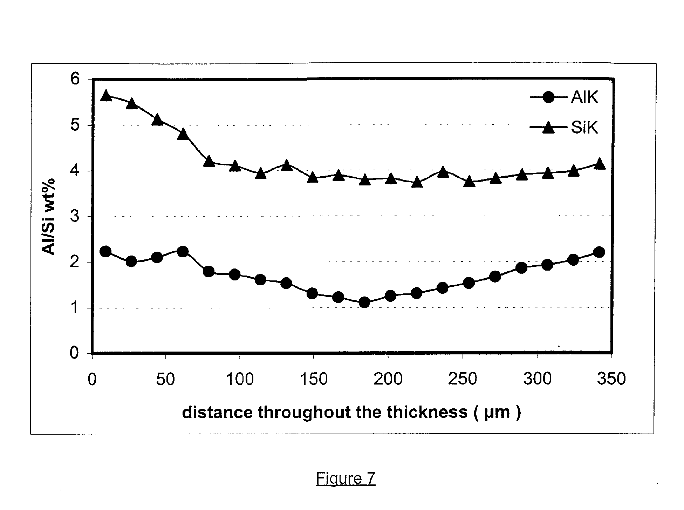

Silicon and aluminum concentration gradients (noted SiK and AIK) throughout the resulting modified steel sheet are reported in figure 7. As compared to figure 2, the aluminum concentration is much lower (about 1.7% by weight instead of more than 6% by weight) and less homogeneous within the whole sheet thickness than in example 1. As compared to figure 2, the silicon concentration is significantly lower (about 4.1% by weight instead of about 5.8% by weight) and shows a profile within the whole sheet thickness which is both asymmetric and less homogeneous (ranging from 3.6 to 5.6% by weight) than in example 1.

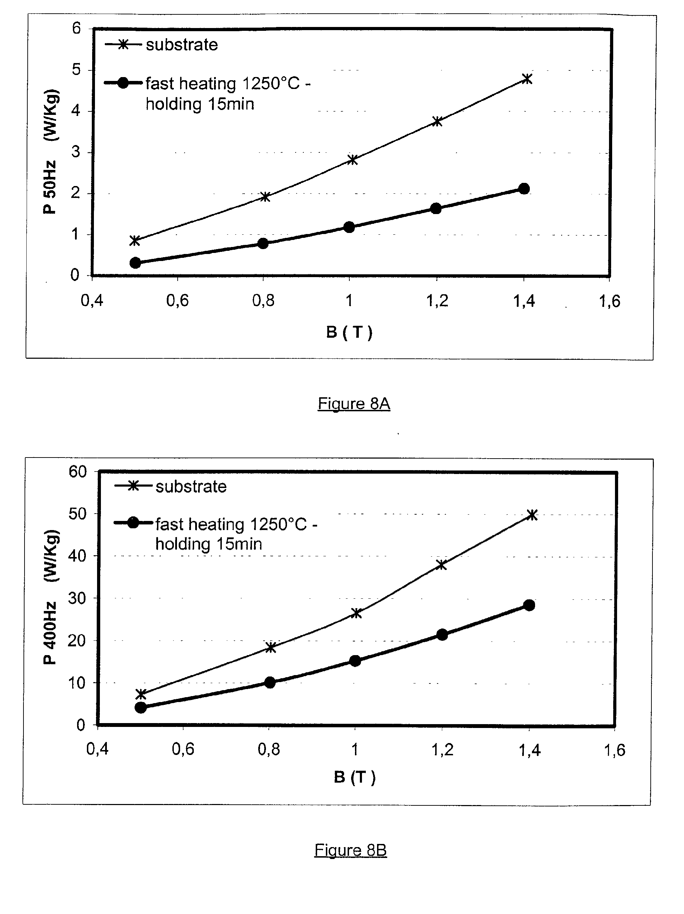

Results of magnetic properties measurements are reported in the following table 1 and also shown in figure 8, wherein the power loss (in W/kg) at 50Hz (figure 8A) and 400 Hz (figure 8B) respectively is given at different peak induction levels B (in tesla) and wherein the modified steel sheet of example 2 is compared to the starting untreated material. Unexpectedly good properties, including a power loss (at a peak induction level of 1.4 tesla) of 2.1 W/kg at 50 Hz and 28.6 W/kg at 400 Hz, are achieved in the modified steel sheet of the invention even using fast heating. Sample 3 processed with slow heating had homogeneous Al and Si concentrations over the sample thickness of 5% Si and 3% Al. Sample 4 processed with slow heating had homogeneous Al and Si concentrations over the sample thickness of 6.3% Si and 4.5% Al.

The methods explained above allow the production of steel sheet materials with different magnetic properties depending on exact processing conditions, such as dipping time, rate of heating, anneal time and temperature. Hence, the present invention allows the production of steels at different grades depending upon their magnetic losses at 50 and 400 Hz. Four such grades are shown in table 1, whereby the loss values are given as maxima at the relevant magnetic field strength. Each grade is expressed in the percentage loss of untreated substrate material and each grade is an embodiment of the present invention.

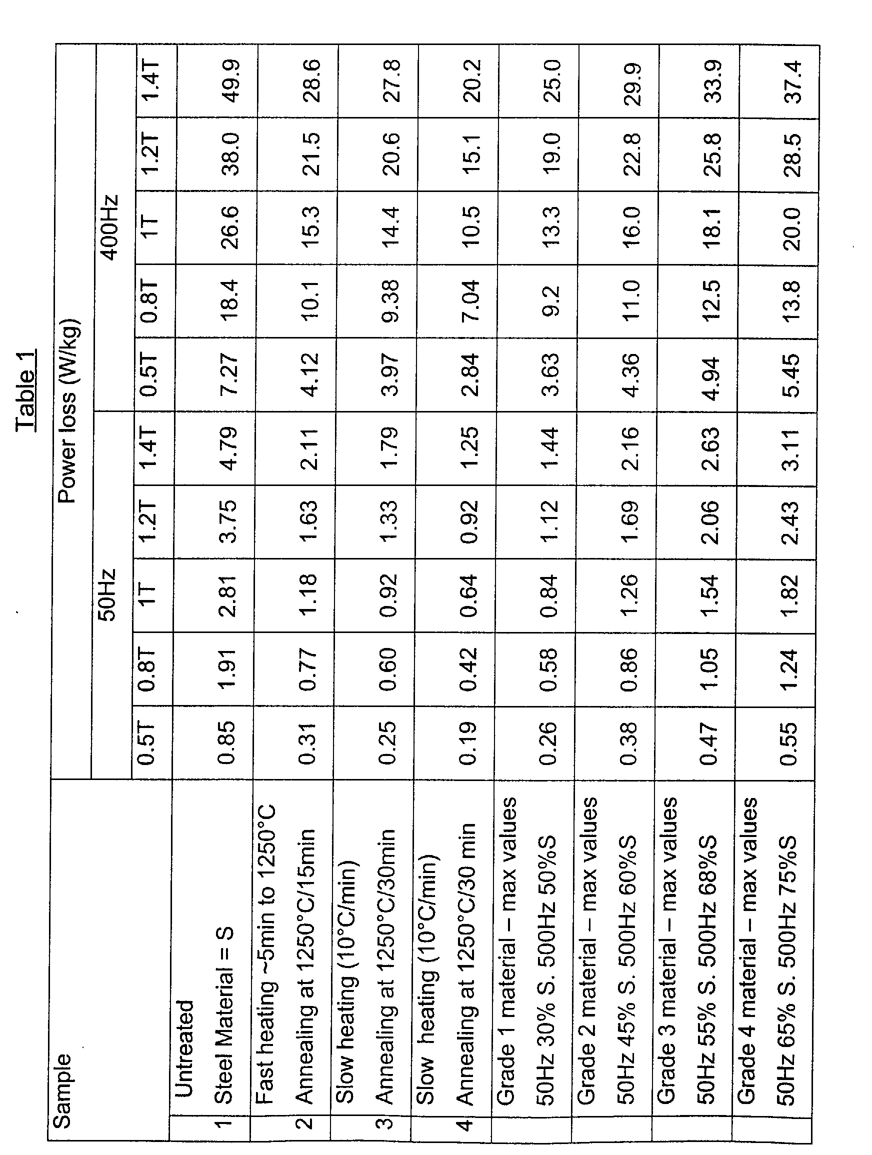

## Claims

1. A process for producing steel sheet with a silicon content between about 3.5% and 8% by weight and an aluminum content up to about 8% by weight, comprising (i) hot-dipping a steel substrate with a silicon content below about 3.5% by weight into a silicon-aluminum hyper-eutectic mixture followed by (ii) a thermal treatment step, wherein step (ii) is performed within a temperature range between about 700° and 1300°C for a period of time of not more than about 100 hours.

2. A process for producing steel sheet according to claim 1, wherein step (ii) is performed for a period of time of at most about 5 minutes.

3. A process for producing steel sheet according to claim 1 or claim 2, wherein the hot-dipping step (i) is performed within a temperature range between about 650° and 900°C.

4. A process for producing steel sheet according to any of claims 1 to 3, **characterized in that** Si- and Al-enriched steel from the hot-dipping step (i) is heated up to the temperature of the thermal treatment step (ii) at a heating rate between about 5 and 300°C per minute.

5. A process for producing steel sheet according to any of claim 1 to 4, wherein a first alloying treatment step is performed after the hot-dipping step (i) and prior to the thermal treatment step (ii).

6. A process for producing steel sheet according to any of claims 1 to 5, wherein the hot-dipping step (i) is performed under an inert atmosphere or a reducing atmosphere.

7. A process for producing steel sheet according to any of claims 1 to 6, wherein the thermal treatment step (ii) is performed under an inert atmosphere or a reducing atmosphere.

8. A process for producing steel sheet according to any of claims 1 to 7, wherein the hot-dipping step (i) is performed under vacuum.

9. A process for producing steel sheet according to any of claims 1 to 8, wherein the thermal treatment step (ii) is performed under vacuum.

10. A process for producing steel sheet according to any of claims 1 to 9, wherein steel is in the form of a sheet with a thickness between 0.2 and 2 mm.

11. A process for producing steel sheet according to any of claims 1 to 10, wherein steel is in the form of a sheet with a thickness between 0.3 and 1 mm.

12. A process for producing steel sheet according to any of claims 1 to 11, wherein Si- and Al-enriched steel from the hot-dipping step (i) is coated with one or more Si-rich and Al-rich layers consisting of phases selected from Fe₃Si and aluminum-containing intermetallics such as FeAl₂, Al₃Fe₃Si₂, Al₁₂Fe₆Si₅ and Al₃FeSi₂.

13. A process for producing steel sheet according to any of claims 1 to 12, wherein the silicon-aluminum hyper-eutectic mixture comprises from about 15 to 35% by weight silicon.

14. A process for producing steel sheet according to any of claims 1 to 13, being performed continuously.

15. A process for producing steel sheet according to any of claims 1 to 14, further including a cold rolling step and/or a pickling/cleaning step and/or a final annealing step after the thermal treatment step.

16. A steel sheet obtained from a process according to any of claims 1 to 15.

17. A steel sheet according to claim 16, having a substantially homogeneous silicon and/or aluminum concentration within the whole sheet thickness.

18. A steel sheet according to claim 16 or claim 17, having a silicon content of about 3.5 to 8% by weight.

19. A steel sheet according to claim 16, having an aluminum content of about 0.1 to 7.5% by weight.

20. An electrical equipment comprising a component made from a steel sheet obtained from a process according to claim 1.

21. An apparatus for producing steel sheet with a silicon content between about 3.5% and 8% by weight and an aluminum content up to about 8% by weight, comprising:
- (i) a device for liquid coating a steel substrate with a Si-content below about 3.5% by weight into a silicon-aluminum hyper-eutectic mixture,
- (ii) a control device for controlling the process parameters of the liquid coating device,
- (iii) a thermal treatment device located downstream from the liquid coating device for diffusing silicon and aluminum of the hyper-eutectic mixture into the steel substrate, and
- (iv) a control device for controlling the process parameters of the thermal treatment device, the said process parameters including at least a temperature range between about 700° and 1300°C and a period of time of not more than about 100 hours.

22. An apparatus for producing steel sheet according to claim 21, wherein the liquid coating device is a hot dip-coater.

23. An apparatus for producing steel sheet according to claim 21 or claim 22, further comprising means for providing an inert atmosphere, a reducing atmosphere or a vacuum in the hot-dip coater.

24. An apparatus for producing steel sheet according to any of claims 21 to 23, further comprising means for providing vacuum, a reducing atmosphere or an inert atmosphere in the thermal treatment device.

25. An iron-based alloy including above 3.5% by weight and up to about 8% by weight silicon and from about 0.1% to about 7.5% by weight aluminum.

26. An iron-based alloy according to claim 25, in the form of a sheet.

27. An iron-based alloy according to claim 25 or claim 26, being non-oriented and having a power loss at 50 Hz of not more than 4 W/kg at a field strength of 1.5 tesla.

28. A non-oriented iron-based alloy including silicon and aluminum and having a power loss at 50 Hz of not more than 3 W/kg at a field strength of 1.5 tesla.
